# EUROPÄISCHE PATENTSCHRIFT

(11) **EP 1 457 709 B1**
(45) Veröffentlichungstag und Bekanntmachung des Hinweises auf die Patenterteilung: **13.09.2006**
(21) Anmeldenummer: 04014046.9
(22) Anmeldetag: 19.12.2001
(51) Int. Cl.: F16H 29/08, F16H 9/12

(54) **Vorrichtung zum Antreiben eines Ausgangsglieds**
Device for driving an output mechanism
Dispositif d'entraînement d'un organe de sortie

(30) Priorität: 23.12.2000 DE 10064899
(43) Veröffentlichungstag der Anmeldung: 15.09.2004
(62) Teilanmeldung aus: 01990320.2
(73) Patentinhaber: ROBERT BOSCH GMBH, 70442 Stuttgart (DE)
(72) Erfinder: Houben, Sjeng, 2382 Poppel (BE)
(74) Vertreter: Heyerhoff, Markus

(56) Entgegenhaltungen:
- EP-A- 0 073 923
- DE-B- 1 049 188
- DE-C- 259 132
- GB-A- 2 054 794
- GB-A- 191 024 157
- US-A- 3 726 149
- US-A- 3 848 474

## Beschreibung

### Stand der Technik

Die Erfindung betrifft eine Vorrichtung zum Antreiben eines Ausgangsglieds mit einer rotierenden Eingangswelle.

Aus dem Stand der Technik sind Vorrichtungen zum Antreiben eines Ausgangsglieds mit einer rotierenden Eingangswelle bekannt, die in Bohrmaschinen, Schlagbohrern oder dergleichen Verwendung finden. Derartige Vorrichtungen weisen zwischen der Eingangswelle und dem Ausgangsglied mehrere als Übersetzung vorgesehene und eine formschlüssige Verbindung zwischen der Eingangswelle und dem Ausgangsglied ausbildende Zahnräder auf, um eine als Antrieb dienende hohe Drehzahl der Eingangswelle in eine niedrigere Bewegungsfrequenz bzw. Drehzahl des Ausgangsglieds bei gleichzeitiger Erhöhung der auf das Ausgangsglied zu übertragenden Antriebskraft zu transformieren.

Nachteilig dabei ist jedoch, dass der Einsatz von Zahnrädern hohe Fertigungskosten bei der Herstellung der bekannten Vorrichtungen verursacht und bei einer Verwendung in Bohrmaschinen, Schlaghämmern oder Bohrschlaghämmern deren Gesamtkosten erhöhen.

Aus der GB 24157 A.D. 1910, die als nächstliegender Stand der Technik angesehen wird, ist eine Vorrichtung zum Antreiben eines Ausgangsglieds mit einer rotierend antreibbaren Eingangswelle bekannt, wobei zwischen der Eingangswelle und dem Ausgangsglied Mittel zum Übertragen eines Antriebsmoments der Eingangswelle auf das Ausgangsglied angeordnet sind. Zwischen einem ersten Mittel und dem Ausgangsglied ist eine kraftschlüssige Wirkverbindung herstellbar, mittels der eine alternierende Bewegung des ersten Mittels in eine Bewegung des Ausgangsglieds umwandelbar ist. Die kraftschlüssige Wirkverbindung ist durch eine Spannkraft eines Federelements gesteuert.

Ein zweites Mittel ist mit dem ersten Mittel über einen Mitnehmer um einen Drehpunkt drehbar verbunden. Das zweite Mittel ist drehbar auf einer Achse gelagert und mit einem von der Achse radial nach außen gerichteten Arm versehen. Das erste Mittel und das zweite Mittel sind derart drehend miteinander verbunden, dass eine alternierende Bewegung des ersten Mittels eine Drehbewegung des Arms um die Achse und ein Verklemmen eines Übertragungselements bewirkt. Das Übertragungselement ist zwischen einer Innenfläche eines das zweite Mittel umgebenden koaxial zu der Achse angeordneten Ringkörpers und dem dem Ringkörper zugewandten Ende des Arms angeordnet.

### Vorteile der Erfindung

Mit der erfindungsgemäßen Vorrichtung zum Antreiben eines Ausgangsglieds mit einer rotierend antreibbaren Eingangswelle, bei welcher zwischen der Eingangswelle und dem Ausgangsglied Mittel zum Übertragen eines Antriebsmoments der Eingangswelle auf das Ausgangsglied angeordnet sind und zwischen einem ersten Mittel und dem Ausgangsglied eine kraftschlüssige Wirkverbindung herstellbar ist, mittels der eine alternierende Bewegung des ersten Mittels in eine Bewegung des Ausgangsglieds umwandelbar ist, erfolgt der Antrieb des Ausgangsglieds in einfacher Art und Weise ohne Zahnräder, wodurch die Herstellkosten vorteilhafterweise erheblich reduziert werden, und zwar speziell bei größeren Übersetzungen.

Darüber hinaus bietet die erfindungsgemäße Vorrichtung den Vorteil, dass eine hohe Drehzahl der Eingangswelle in eine erheblich langsamere Bewegung bzw. Bewegungsfrequenz des Ausgangsglieds umwandelbar und dabei eine erwünschte große Antriebskraft des Ausgangsglieds erzeugbar ist.

### Zeichnung

Weitere Vorteile ergeben sich aus der folgenden Zeichnungsbeschreibung. In der Zeichnung sind mehrere Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erste Ausführungsform der erfindungsgemäßen Vorrichtung in einer Querschnittsdarstellung und
- Fig. 2: die Vorrichtung gemäß Fig. 1 in einer weiteren Querschnittsdarstellung.

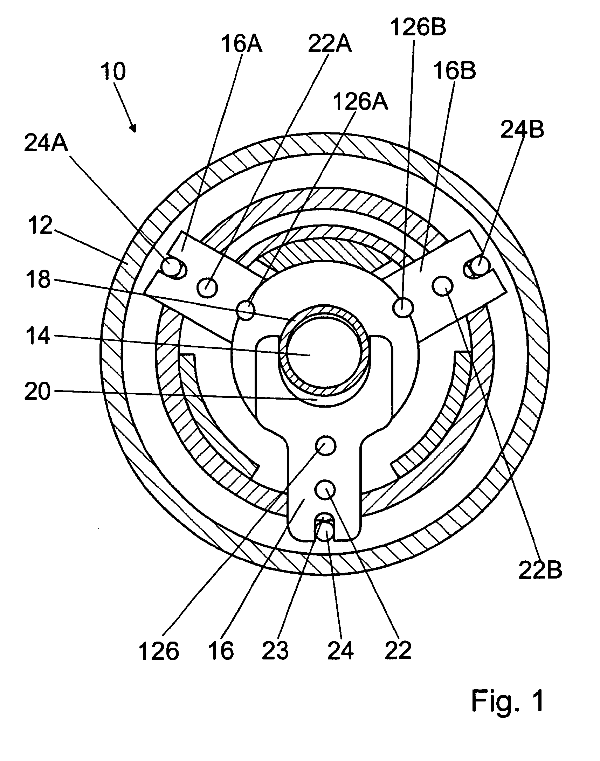

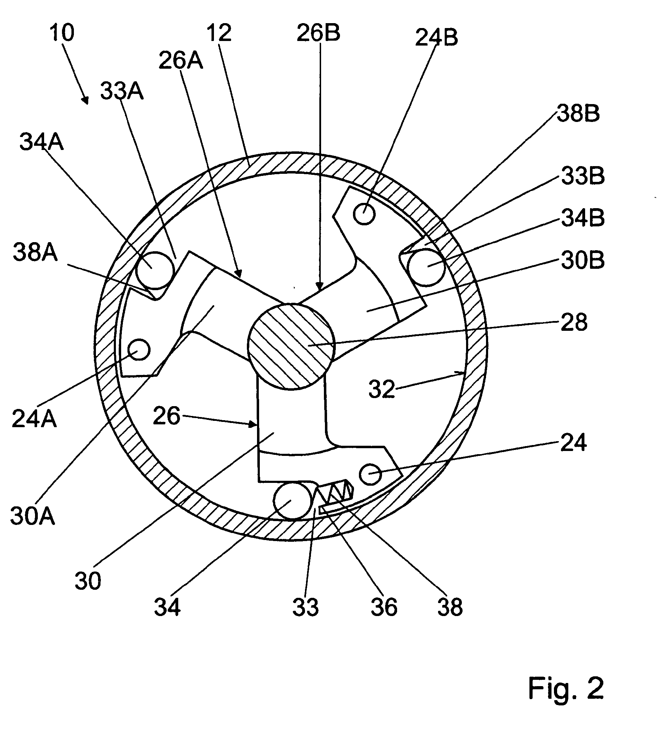

In Fig. 1 und Fig. 2 ist eine Vorrichtung 10 zum Antreiben eines Ausgangsglieds über einen Ringkörper 12 mit einer rotierend antreibbaren Eingangswelle 14 der Vorrichtung 10, die gleichzeitig die Ausgangswelle eines nicht näher dargestellten Elektromotors ist, dargestellt. Zwischen der Eingangswelle 14 und dem Ausgangsglied sind Mittel zum Übertragen eines Antriebsdrehmoments der Eingangswelle 14 auf das Ausgangsglied bzw. dem Ausgangsglied vorgeschalteten Ringkörper 12 angeordnet.

Dabei ist zwischen einem ersten als Schwinge ausgebildeten Mittel 16 und dem Ausgangsglied eine kraftschlüssige Wirkverbindung herstellbar, mittels der eine alternierende Bewegung der Schwinge 16 in mehrere aufeinanderfolgende Bewegungen bzw. Drehbewegungen des Ausgangsglieds in eine Richtung umwandelbar ist, wobei die mehrfachen Bewegungen einen kontinuierlichen Betrieb des Ausgangsglieds erzeugen. Neben der ersten Schwinge 16 sind jeweils um 120° verdreht und axial hintereinander zwei baugleiche Schwingen 16A und 16B angeordnet. Die nachfolgende Funktionsweise der Schwinge 16 gilt entsprechend für die Schwingen 16A und 16B.

Das Ausgangsglied, welches in Fig. 1 und Fig. 2 nicht näher dargestellt ist, ist in einem hinter der Zeichenebene angeordneten Bereich der Vorrichtung 10 mit dem Ringkörper 12 über eine geeignete Verbindung derart verbunden, dass aus einer Drehbewegung des Ringkörpers 12 eine Drehbewegung des Ausgangsglieds resultiert.

Die Eingangswelle 14 ist mit einer im Querschnitt ringförmig ausgebildeten Hülse 18 versehen, welche in einer Ausnehmung 20 der Schwinge 16 angeordnet und als Exzenter zum alternierenden Antreiben der Schwinge 16 vorgesehen ist. Die Schwinge 16 ist wiederum über einen Drehbolzen 22 mit einem nicht näher dargestellten Gehäuse der Vorrichtung 10 verbunden, wobei die Schwinge 16 bei rotierender Eingangswelle 14 und der gegenüber der Eingangswelle 14 bzw. deren Rotationsachse exzentrisch angeordneten Hülse 18 um den Drehbolzen 22 alternierend hin- und herbewegt bzw. hin- und hergeschwenkt wird. Es liegt selbstverständlich im Ermessen des Fachmanns, die Hülse 18 auch einstückig mit der Eingangswelle 14, wie beispielsweise als Nocken einer Nockenwelle, auszubilden.

Die Schwinge 16 weist an ihrem der Ausnehmung 20 abgewandten Ende eine Aufnehmung 23 auf, in welcher ein Mitnehmer 24 angeordnet ist, welcher mit einem zweiten Mittel 26 verbunden ist. Das zweite Mittel 26 ist auf einer Achse 28 drehbar gelagert und mit einem von der Achse 28 radial nach außen gerichteten Arm 30 versehen. Anstatt Arme sind grundsätzlich auch in axialer Richtung hintereinander angeordnete Scheiben denkbar. Die Schwinge 16 und das zweite Mittel 26 sind über den Mitnehmer 24 derart drehend miteinander verbunden, dass die durch die Rotation der Eingangswelle 14 bewirkte alternierende Bewegung der Schwinge 16 eine Drehbewegung bzw. Rotation des Arms 30 um die Achse 28 bewirkt.

Zwischen einer Innenfläche 32 des Ringkörpers 12 bzw. Außenrings, der das zweite Mittel 26 umgibt und koaxial zu der Achse 28 angeordnet ist, und dem dem Ringkörper 12 zugewandten, mit einer Aufnahme 33 ausgebildeten Ende des Arms 30 ist in der Aufnahme 33 ein von einem Wälzkörper 34 gebildetes Übertragungselement angeordnet. Der Wälzkörper 34 ist im vorliegenden Ausführungsbeispiel als zylindrischer Körper 34 ausgebildet, wobei es selbstverständlich im Ermessen des Fachmanns liegt, den Wälzkörper als Kugeln, tonnenförmige Körper oder dergleichen auszubilden. Ferner wären auch verschiedenartige Gleitsteine denkbar usw.

Der Arm 30 weist im Bereich der Aufnahme 33 eine Sacklochbohrung 36 auf, in welcher ein Federelement 38 angeordnet ist, das sich mit einem Ende am Boden der Sacklochbohrung 36 abstützt und mit seinem anderen Ende am Wälzkörper 34 anliegt.

Bei einer Bewegung des Mitnehmers 24 entgegen dem Uhrzeigersinn, gemäß der Darstellung in Fig. 2, wälzt sich der zylindrische Wälzkörper 34 zwischen der Innenfläche 32 des Ringkörpers 12 und dem Ende des Arms 30 ab und verklemmt sich zwischen der Innenfläche 32 des Ringkörpers 12 und dem dem Ringkörper 12 zugewandten Ende des Arms 30, wobei der Ringkörper 12 entgegen dem Uhrzeigersinn in Drehbewegung versetzt wird. Die zweiten Mittel 26, 26A, 26B treiben über die zylindrischen Wälzkörper 34, 34A, 34B den Ringkörper 12 und damit das nicht näher dargestellte Ausgangsglied nacheinander schrittweise an.

Bei einer Bewegung des Mitnehmers 24 im Uhrzeigersinn rollt bzw. wälzt sich der zylindrische Wälzkörper 34, belastet durch das Federelement 38, lediglich auf der Innenfläche 32 des Ringkörpers 12 ab, ohne zu verklemmen. Möglich ist auch, dass der Wälzkörper 34 bei einer Bewegung des Mitnehmers 24 im Uhrzeigersinn auf der Innenfläche 32 gleitet.

Der Abstand zwischen dem Mitnehmer 24 und dem Drehbolzen 22 kann verändert werden und mit dem Abstand eine sich einstellende Übersetzung, und zwar indem der Drehbolzen 22 radial nach innen in eine alternative Ausnehmung 126 gesetzt wird. Grundsätzlich wäre auch eine stufenlose Verschiebung eines Drehbolzens und damit eine stufenlose Einstellung einer Übersetzung denkbar.

Mit der unterschiedlichen Positionierung des Drehbolzens 22 kann auf einfache Art und Weise ein Umfang einer Reduzierung der von der Eingangswelle 14 ausgehenden Drehzahl, welche letztendlich auf das Ausgangsglied übertragen wird, eingestellt und damit eine Einstellung der Größe des Werts des auf das Ausgangsglied aufgebrachten Ausgangsdrehmoments ermöglicht werden.

Entgegen der vorliegend beschriebenen Art und Weise, dass der Ringkörper 12 lediglich entgegen dem Uhrzeigersinn in Rotation versetzt werden kann, kann es in einer weiteren, von dem vorliegenden Ausführungsbeispiel abweichenden Ausführungsform der Vorrichtung vorgesehen sein, dass der Arm des zweiten Mittels 26 derart konstruktiv ausgebildet ist, dass der Ringkörper 12 im Uhrzeigersinn und entgegen dem Uhrzeigersinn in Drehung versetzt werden kann. Eine derartige Ausgestaltung der Vorrichtung kann für den Einsatz in einer Bohrmaschine mit zwei unterschiedlichen Drehrichtungen vorgesehen werden, jedoch grundsätzlich auch bei anderen, dem Fachmann als sinnvoll erscheinenden Maschinen.

Darüber hinaus besteht selbstverständlich die Möglichkeit, mehr oder weniger als die vorgeschlagene Anzahl von Armen zum Antreiben des Ausgangsglieds vorzusehen, um ein an den jeweilig vorliegenden Anwendungsfall angepasstes Antriebssystem zu erhalten.

### Bezugszeichen

- 10: Vorrichtung
- 12: Ringkörper
- 14: Eingangswelle
- 16: Mittel
- 18: Hülse
- 20: Ausnehmung
- 22: Drehbolzen
- 23: Aufnehmung
- 24: Mitnehmer
- 26: Mittel
- 28: Achse
- 30: Arm
- 32: Innenfläche
- 33: Aufnahme
- 34: Wälzkörper
- 36: Sacklochbohrung
- 38: Federelement
- 126: Ausnehmung

## Patentansprüche

1. Vorrichtung (10) zum Antreiben eines Ausgangsglieds mit einer rotierend antreibbaren Eingangswelle (14), wobei zwischen der Eingangswelle (14) und dem Ausgangsglied Mittel (16, 26) zum Übertragen eines Antriebsmoments der Eingangswelle (14) auf das Ausgangsglied angeordnet sind, wobei zwischen einem ersten Mittel (16) und dem Ausgangsglied eine kraftschlüssige Wirkverbindung herstellbar ist, mittels der eine alternierende Bewegung des ersten Mittels (16) in eine Bewegung des Ausgangsglieds umwandelbar ist, wobei ein weiteres Mittel (26) mit dem ersten Mittel (16) über einen Mitnehmer (24) um einen Drehpunkt drehbar verbunden ist, das weitere Mittel (26) drehbar auf einer Achse (28) gelagert ist und mit zumindest einem von der Achse (28) radial nach außen gerichteten Arm (30) versehen ist, und das erste Mittel (16) und das weitere Mittel (26) derart drehend miteinander verbunden sind, dass eine alternierende Bewegung des ersten Mittels (16) eine Drehbewegung des Arms (30) um die Achse (28) und ein Verklemmen eines zwischen einer Innenfläche (32) eines das weitere Mittel (26) umgebenden koaxial zu der Achse (28) angeordneten Ringkörpers (12) und dem dem Ringkörper (12) zugewandten Ende des Arms (30) vorgesehenen Übertragungselements (34) bewirkt, **dadurch gekennzeichnet dass** eine sich einstellende Übersetzung in ihrer Höhe durch Variation einer Lagerstelle des ersten Mittels (16) erreichbar ist.

2. Vorrichtung nach Anspruch 1, **dadurch gekennzeichnet, dass** eine sich einstellende Übersetzung variierbar ist.

3. Vorrichtung nach einem der vorhergehenden Ansprüche, **dadurch gekennzeichnet, dass** der Ringkörper (12) mit dem Ausgangsglied in Wirkverbindung steht und ein Verklemmen des Übertragungselements (34) eine Drehbewegung des Ringkörpers (12) und des Ausgangsglieds bewirkt.

4. Vorrichtung nach einem der vorhergehenden Ansprüche, **dadurch gekennzeichnet, dass** die Eingangswelle (14) einen Exzenter (18) aufweist, der mit dem ersten Mittel (16) derart in Wirkverbindung steht, dass das erste Mittel (16) bei rotierender Eingangswelle (14) in Abhängigkeit einer Bewegung des Exzenters (18) alternierend bewegt wird.

5. Vorrichtung nach einem der vorhergehenden Ansprüche, **dadurch gekennzeichnet, dass** die kraftschlüssige Wirkverbindung durch eine Spannkraft eines Federelements (38) gesteuert ist.

6. Vorrichtung nach einem der vorhergehenden Ansprüche, **dadurch gekennzeichnet, dass** die Mittel (16, 26) derart ausgebildet sind, dass eine alternierende Drehbewegung des ersten Mittels (16) in eine rotatorische Bewegung des Ausgangsglieds umwandelbar ist.

## Claims

1. Device (10) for driving an output member (46) by means of an input shaft (14) capable of being driven in rotation, means for transmitting a drive torque of the input shaft (14) to the output member (46) being arranged between the input shaft (14) and the output member (46), a non-positive operative connection capable of being made between a first means (16) and the output member (46), by means of which operative connection an alternating movement of the first means (16) can be converted into a movement of the output member (46), the means being designed in such a way that the alternating rotational movement of the first means (16) can be converted into a translational movement of the output member (46), **characterized in that** the first means (16) has fastened to it rotatably at least one lever element (54), via which the first means (16) is operatively connected to at least one gripping element (58).

2. Device according to Claim 1, **characterized in that** two gripping elements (58) are connected pivotably to one another via a further lever element (62) and can be clamped together with the output member (46) as a function of the alternating movement of the first means (16).

3. Device according to Claim 1 or 2, **characterized in that** the gripping element (58) engages with a gripping arm (72) over the output member (46), and the insides (76) of the gripping arm (72) which face the output member (46) have a curvature directed towards the output member (46), the curvatures being in contact with the output member (46).

4. Device according to one of the preceding claims, **characterized in that** the input shaft (14) has an eccentric (70) which is operatively connected to the first means (16) in such a way that, when the input shaft (14) rotates, the first means (16) is moved in alternation as a function of a movement of the eccentric (70).

5. Device according to one of the preceding claims, **characterized in that** the non-positive operative connection is controlled by means of a tension force of a spring element (82).

6. Device according to one of the preceding claims, **characterized in that** a step-up occurring is variable.

## Revendications

1. Dispositif (10) d'entraînement d'un organe de sortie comprenant un arbre d'entrée (14) pouvant être entraîné en rotation, des moyens (16, 26) de transmission d'un couple d'entraînement de l'arbre d'entrée (14) disposés sur l'organe de sortie entre l'arbre d'entrée (14) et l'organe de sortie, avec une liaison active par complémentarité de force pouvant être créée entre un premier moyen (16) et l'organe de sortie pour convertir un mouvement alternatif du premier moyen (16) en un mouvement de l'organe de sortie, un autre moyen (26) relié au premier moyen (16) par un entraîneur (24) avec rotation possible autour d'un point de rotation, l'autre moyen (26) placé avec rotation possible sur un axe (28) étant muni d'au moins un bras (30) tourné radialement vers l'extérieur par rapport à l'axe (28) alors que le premier moyen (16) et l'autre moyen (26) sont reliés en rotation l'un avec l'autre de telle manière qu'un mouvement alternatif du premier moyen (16) provoque un mouvement de rotation du bras (30) autour de l'axe (28) et un coincement d'un élément de transfert (34) prévu entre une surface intérieure (32) d'un corps annulaire (12) disposé coaxialement par rapport à l'axe (28) et entourant l'autre moyen (26), et l'extrémité du bras (30) tournée vers le corps annulaire (12),
**caractérisé en ce qu'**
une démultiplication réglable en hauteur peut être obtenue en variant une position de palier du premier moyen (16).

2. Dispositif selon la revendication 1,
**caractérisé par**
une démultiplication réglable variable.

3. Dispositif selon l'une quelconque des revendications précédentes,
**caractérisé en ce que**
le corps annulaire (12) est en liaison active avec l'organe de sortie et un coincement de l'élément de transfert (34) provoque un mouvement de rotation du corps annulaire (12) et de l'organe de sortie.

4. Dispositif selon l'une quelconque des revendications précédentes,
**caractérisé en ce que**
l'arbre d'entrée (14) présente un excentrique (18) en liaison active avec le premier moyen (16) pour déplacer le premier moyen (16) en va-et-vient en fonction d'un mouvement de l'excentrique (18) lorsque l'arbre d'entrée (14) tourne.

5. Dispositif selon l'une quelconque des revendications précédentes,
**caractérisé en ce que**
la liaison active par complémentarité de force est commandée par une force de serrage d'un élément à ressort (38).

6. Dispositif selon l'une quelconque des revendications précédentes,
**caractérisé en ce que**
les moyens (16, 26) sont conçus pour convertir un mouvement de rotation alternatif du premier moyen (16) en un mouvement rotatif de l'organe de sortie.
